(19) **Europäisches Patentamt**

**European Patent Office**

**Office européen des brevets**

(11) **EP 0 829 032 B1**

(12) **EUROPEAN PATENT SPECIFICATION**

(45) Date of publication and mention
of the grant of the patent:
**16.04.2003   Bulletin 2003/16**

(51) Int Cl.⁷: **G02F 1/15**, G02F 1/153,
G02F 1/155

(21) Application number: **95922868.5**

(22) Date of filing: **25.05.1995**

(86) International application number:
**PCT/US95/05146**

(87) International publication number:
**WO 96/037809 (28.11.1996 Gazette 1996/52)**

(54) **MONOLITHIC MULTI-LAYER ELECTROCHROMIC COMPOSITE SYSTEM WITH INNER BUFFER LAYERS**

MONOLITHISCHES ELEKTROCHROMES MEHRSCHICHT-VERBUNDSYSTEM MIT INNEREN PUFFERSCHICHTEN

SYSTEME COMPOSITE ELECTROCHROMIQUE MONOLITHE MULTICOUCHE AVEC COUCHES D'AMORTISSEMENT INTERNES

(84) Designated Contracting States:
**AT BE CH DE DK ES FR GB GR IE IT LI LU MC NL
PT SE**
Designated Extension States:
**LT SI**

(43) Date of publication of application:
**18.03.1998   Bulletin 1998/12**

(73) Proprietors:
• **ISOCLIMA S.p.A.**
  **35042 Este (Padova) (IT)**
• **Comdisco, Inc.**
  **Rosemont, IL 60018 (US)**
• **Dominion Ventures, Inc.**
  **San Francisco, CA 94104 (US)**

(72) Inventors:
• **DEMIRYONT, Hulya**
  **Yesilkoy, Istanbul 34800 (TR)**
• **SCHAUS, Christian, F.**
  **Hillsboro, OR 97124 (US)**
• **HU, James**
  **Cincinnati, OH 45245 (US)**
• **KALLMAN, William, R.**
  **Portland, OR 97219 (US)**

(56) References cited:
| EP-A- 0 628 849 | US-A- 4 889 414 |
| US-A- 4 960 324 | US-A- 5 076 674 |
| US-A- 5 260 821 | US-A- 5 355 245 |

• **PATENT ABSTRACTS OF JAPAN vol. 006, no.
162 (P-137), 25 August 1982 -& JP 57 081241 A
(CITIZEN WATCH CO LTD), 21 May 1982,**

EP 0 829 032 B1

**Description**

Technical Field

The present invention relates generally to electrochromic devices. More particularly, the invention concerns a monolithic multi-layer electrochromic composite material with inner buffer layers, which material is usable as an electrochromic device when combined with suitable electrodes and a power or voltage source.

Background Art

An electrochromic (EC) material changes its optical properties upon oxidation or reduction. In a cathodic EC material, e.g. $W^{+6}O_3$, change in optical properties occurs upon reduction of tungsten, e.g., $W_{+5}O_x$ or $MW^{+5}O_3$ where M is a light element that forms a monovalent cation, e.g., $(H^+e^-)$, $(Li^+e^-)$. Such EC material is called cathodic EC because it colors upon reduction. Examples of cathodic EC materials are $WO_3$, $MoO_{3x}$, $CuO^{(1)}_x$, $BiO^{(2)}_x$, $PbO^{(3)}_x$, $V_2O_5$ is a cathodic EC material with relatively low coloring efficiency.

In an anodic EC material, e.g. $IrO_x$, coloration occurs in the higher oxidation state of Ir and bleaching occurs upon injection of a monovalent cation and electron pairs into the EC material causing reduction of Ir. Conventional anodically coloring EC materials are bleached using proton-injection. $IrO_x$, $NiO_x$, $Ni(OH)_2$ are strong anodic EC materials, and $CoO_x$, $MnO_x$ and $CrO_x$ are weak anodic EC materials.

It is known that cathodic or anodic EC layers can be activated by proton or lithium injection and, of the two, lithium-based injection tends to be more reliable.

In addition to anodically or cathodically coloring EC materials, there is a third group of EC materials that are optically passive upon either oxidation or reduction. An example of such a material is $(CeO_x)_c(TiO_2)_{1-c}$, which exhibits a pale yellow color and is receptive to lithium injection. EC materials in this third group stay generally clear and colorless during either injection or extraction of ion-electron pairs.

Generally speaking, an EC device (ECD) includes an EC material deposited on a conductor, and the EC material is in contact with an ion conductor material, or electrolyte. The two layers are positioned between electrodes, or conductors, at least one of which is a transparent conductive oxide, e.g. indium tin oxide. Mobile ions must also be present within the layers for the ECD to function.

A layered ECD can be established by sandwiching three functional layers between two electrodes. These three functional layers are the electrochromic layer (EC), electrolyte layer (EL), and ion-storage layer (IS). The IS is also known as the counter electrode layer. What is known as an active element is formed by combining the three functional layers, and providing a source of mobile ions within that element.

When the EC material in the ECD changes from one state to another, it may change from a colorless (bleached) state to a colored state. Such a change is produced by applying a voltage across the electrodes and causing mobile ion current flow within the active element. By reversing the polarity of the applied voltage, the EC material can be switched back from a colored state to a colorless state. The EC material has a dielectric property that changes in its bleached state that is useful to produce a color change upon injection of ion-electron pairs when a voltage is applied across the electrodes. This chemical changes effects what is known as the colored states, and there are distinct colors associated with each such state.

An ECD may be what is known as persistent. Persistence is an ECD property as distinguished from a property of the EC material component. Persistence indicates a property of the EC active element when the EC material component is in either its colored or bleached state. Such persistence exists when the EC active element remains in a "switched-to" state after removal of the power. An ECD with EC active element that is not persistent will exhibit substantially instantaneous reversion to a "pre-switched-to" state after removal of the power. The time period that an ECD exhibits persistence is known as its open circuit memory.

With respect to the active element of the ECD, the EL transfers ions, and is an ion conductor. It accommodates bidirectional ion transfer between the EC and the IS during switching between colored and bleached states. Electron transfer during switching into the EC and IS layers occurs at the electrode/EC and electrode/IS interfaces. To maintain charge neutrality, each ion from the IS layer that is injected into the EC layer from EC/EL interface requires an electron transfer at the electrode/EC interface. Since the ECD is a closed system, there is essentially simultaneous occurrence of ion transfer at the IS/EL interface and electron transfer at the IS/electrode interface.

Another known cathodic EC material is $WO_3$. Reduction, i.e. coloring, of such material is achieved by injecting ion-electron pairs into it. To produce uniform charge injection, it is known to deposit a film of $WO_3$ on an electrode layer such as ITO. The electrode layer is a source of electrons. Next, the $WO_3$/ITO composite is either immersed in a liquid electrolyte or the surface of the $WO_3$ layer opposite the ITO is contacted to a solid electrolyte. A DC power supply provides the driving force for charges within the ECD. To color the $WO_3$ layer in a solid state system, the negative polarity of the power supply is coupled to the electrode nearest the $WO_3$ layer. If a liquid electrolyte is used, then a metal wire such as a lithium wire is placed in the electrolyte and coupled to the positive polarity of the power supply. In the liquid electrolyte system, the lithium wire functions as a sink for Li + and e- pairs during bleaching of the $WO_3$ film. In a solid state system, when the polarity of the power supply is reversed, the IS layer contacting the EL has a lithium source/storage function. Necessary electrons are provided to the IS layer by another electrode such as another suitably positioned ITO. The power supply in the solid state system is connected to the two electrodes of the device.

A monolithic, multi-layer electrochromic composite system usable in an electrochromic device as defined in the preamble of claim 1 is known from US-A-5 260 821.

The desired qualities in an ECD include: (1) high color contrast at low charge transfer between layers of active elements, i.e. high color efficiency, 2) low charge transfer voltages for coloring and bleaching, 3) fast color and bleach rates, 4) long open circuit memory, 5) long cycle life, 6) long shelf life, 7) environmental stability, 8) mechanical durability, 9) pleasing light and dark tones for all color states, and 10) haze- and distortion-free optical quality.

Until now, conventional proposals for ECD's and materials for making ECD's have not exhibited all of the above desired qualities. In addition, until now there has not been shown a reliable, monolithic, solid state ECD.

Accordingly, it is a principal object of the present invention to provide an ECD which overcomes the drawbacks of prior art systems.

Another object is to provide such an ECD that exhibits high color contrast for low charge transfer between layers of active elements.

Yet another object is to provide such an ECD that exhibits low charge transfer voltages between electrodes for coloring and bleaching of the EC material.

Still another object is to provide such an ECD that exhibits aesthetically pleasing neutral color states.

Another important object of the invention is to provide such an ECD that exhibits fast color and bleach rates.

Still another object is to provide such an ECD that exhibits long open circuit memory.

Yet another object is to provide such an ECD that exhibits long cycle life.

Other objects are to provide such an ECD that exhibits long shelf life, and environmental and mechanical durability.

It is also an object of the invention to provide such a device that can be easily and cost-effectively manufactured on a single substrate, such as glass, plastic or metals, the latter for mirror applications.

For applications where an ECD is to be used on glass, it is also an object of the invention to provide such an ECD that can be deposited on a substrate with a curved or dioptric surface (e.g., a lens) without changing the properties of that substrate.

Disclosure of the Invention

In brief summary, one aspect of the invention includes a monolithic, multi-layer EC composite system capable of transmitting light and usable in an ECD that has an optical substrate and conductor structure connectable to a power supply as defined in claim 1.

The buffer-layer material is formed as dual buffer layers sandwiching the EL layer, and each buffer layer is formed from a substance chosen from the group consisting of LiF and $V_2O_3$. The EL layer is preferably made from $LiAlF_4$. The preferred thickness of each buffer layer is in the range of about 10-15 nm, and the preferred thickness of the EL layer is about 800 nm. The supply of mobile ions are preferably lithium ions.

Preferably, the invention comprises a multi-layered EL formed from a central EL sublayer of $LiAlF_4$ with a thickness of about 800nm, and opposing EL outer sublayers of LiF each with thicknesses of in a range of about 5-20 nm and preferably about 10-15nm. As will be described, an ECD incorporating the composite-EL-containing EC material of the invention is stable in ambient air allowing spin coating of the ECD with a polymer as a protective overlayer.

Preferably the invention is a monolithic, thermal-shock resistant, multi-layer electrochromic composite material capable of transmitting light without haze and usable in an ECD. The composite material includes opposing first and second outermost layers, a central EC layer positioned closer to the first outermost layer than to the second outermost layer, and a central EL layer positioned closer to the second outermost layer than to the first outermost layer. An ITO layer is positioned between the first outermost layer and the EC layer, and an ion-storage layer is positioned between the second outermost layer and the electrolyte layer. A first buffer layer is coextensive with the top surface of the EL layer, and a second buffer layer is coextensive with the bottom surface of the EL layer. Each first and second layer are made from a material that improves bidirectional charge transfer between the electrochromic layer and the ion-storage layer. The composite system of this aspect of the invention also includes contact structure connected to the layers and connectable to conductor structure to allow power-input.

Another aspect of the invention is like the composite system above except that the plural outermost layers are opposing first and second outermost layers, and an ITO layer is positioned between the first outermost layer and the EC layer. The first outermost layer preferably includes $SiO_x$, where x is in the range of 13 to 1.8, and the first outermost layer has a preferred thickness in the range of about 7-9 nm. The second outermost layer is formed from ITO. For applications using a plastic substrate, there is preferably a first inner layer formed over the first outermost layer, and the first inner layer is formed of $SiO_2$ in a thickness in the range of about 2000-3000 nm. There is also preferably a second inner layer of ITO formed between the EC layer and the first outermost layer. The second inner layer is preferably formed as first and second sublayers, with the first sublayer being formed of ITO that is deposited to provide adhesion to the first outermost layer, and with the second sublayer also being formed of an ITO both of which are deposited by a method such as ion or plasma-assisted evaporation, sputtering, or other thin-film deposition methods that provide a crystalline structure that promotes conductivity. The EC layer is preferably formed from amorphous, thermally evaporated, microporous $WO_x$, where $2.9 \leq x \leq 2.99$, and the EC layer has a thickness in the range of about 200-600 nm with coloring efficiency of about 43 $cm^2/C$. Viewing the EL layer as the multi-layered EL used in the invention, it is preferably formed with a central EL sublayer of amorphous, thermally evaporated, $LiAlF_4$, a molecular ionic solid, with a thickness in the range of about 100-2,000 nm, and opposing outer thermally evaporated sublayers of LiF, each with thicknesses in a range of about 5-20 nm and preferably of about 10-15nm. The broad range of thicknesses for $LiAlF_4$ is possible because the only requirement is a complete, i.e. substantially pinhole-free, coating. The thinnest coating of $LiAlF_4$ that can meet such a requirement is desired because the thinner the $LiAlF_4$ coating the faster the resulting EC composite material.

The IS layer is deposited as a microporous, non-hygroscopic, amorphous or crystalline layer of $VO_x$ material in a preselected color, where $2.0 \leq x \leq 2.5$, and preferably $2.45 \leq x \leq 2.5$, and where the material has a coloring efficiency of 2.5 $cm^2/C$. Ion- or plasma-assisted evaporation, or other suitable techniques are used to deposit the IS layer. The starting material from which the IS layer is formed is $V_2O_5$ powder. That powder is pressed into a body such as a pellet to reduce spitting during evaporation. The thickness of the IS layer is in the range of 100-400nm.

The second outermost layer is preferably ITO that is spin-coated with a pin-hole-free polyurethane coating. The coating is formed with two sublayers, a first sublayer being formulated to adhere to the ITO layer, and to block water and environmental hazards. The second sublayer is formulated to adhere to the first sublayer and to provide scratch resistance. In the preferred embodiment, the sublayers are 100% solids, UV-curable urethane resin formulations.

There is also described a method of making a multi-layer EC composite material that involves depositing in a chamber plural layers on an optical substrate. The layers include inner EC and EL layers, and the steps include (1) choosing a gas at a preselected concentration, (2) directing the gas to the surface of a first layer upon which the electrochromic layer is to be formed, (3) maintaining the gas at the preselected concentration for a preselected time period, and (4) forming the EC layer on the gas-treated first layer.

These and other objects and advantages of the invention will be more clearly understood from a consideration of the accompanying drawings and the following description of the preferred embodiment.

Brief Description of the Drawings

Fig. 1 is an enlarged, fragmentary, schematic view of the EC composite system of the present invention.
Fig. 2 is a fragmentary section of Fig. 1, showing on a further enlarged scale the EL component of the EC composite system of the present invention.

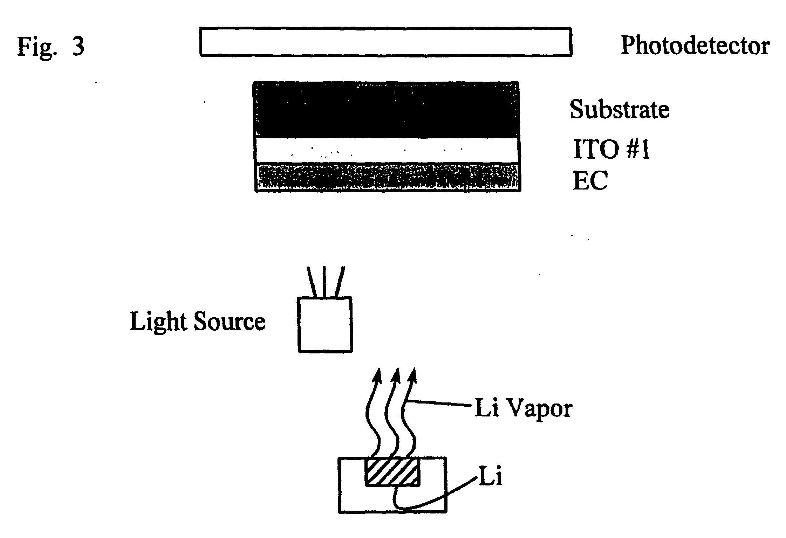

Fig. 3 is a schematic illustration showing dry-loading of lithium ions into the EC layer.
Fig. 4 is a schematic flow diagram showing steps of the method of forming the EC composite system of the invention.

Detailed Description of the Preferred Embodiment and Best Mode for Carrying Out the Invention

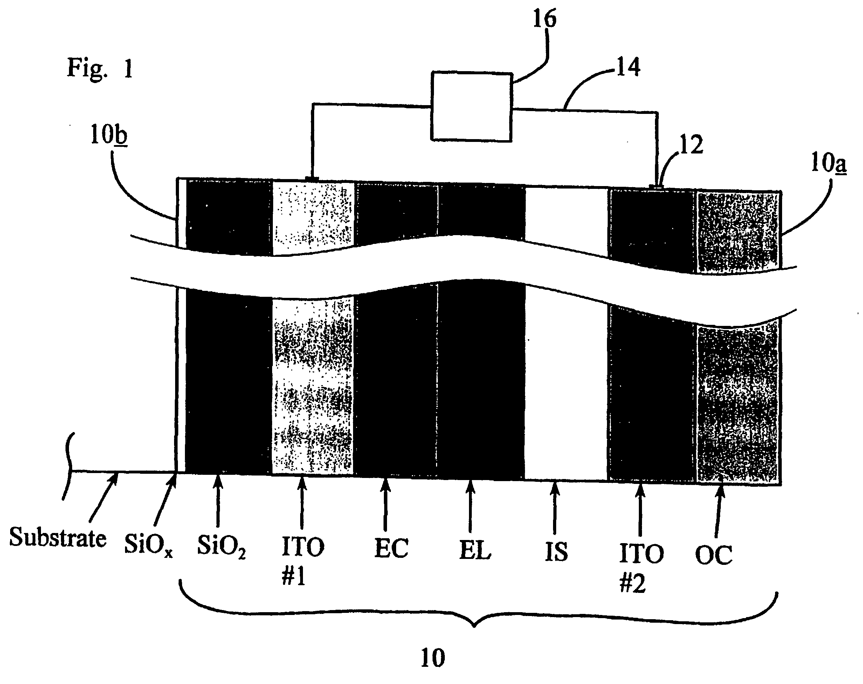

Referring to Fig. 1, there is shown at 10 an enlarged, fragmentary schematic view of the preferred embodiment of the EC composite system of the present invention. EC composite system 10 is monolithic because it is formed on a suitable optical substrate. As will be described further, EC composite system 10 includes the following elements, preferably formed as layers: (1) a first, preferably transparent electrode [indium tin oxide (ITO #1)], (2) electrochromic material (EC), (3) electrolyte material (EL), (4) ion-storage material (IS), (5) a second, preferably transparent electrode (ITO #2), and (6) an overcoat material (OC). Elements (2)-(4), the EC, EL and IS elements, may be thought of as the active element. Elements (1) and (5) are opposing electrodes across which a voltage is applied. Also as will be further described, the substrate may be any suitable substrate but preferably it is glass.

Suitable contacts 12 and conductor structure preferably in the form of conductors 14 couple electrodes ITO #1 and ITO #2 to a suitable power source 16, such as a battery, for producing such a voltage. Power supply 16 has a polarity- and voltage-controlled- D.C. source. The preferred way of connecting composite system 10 to a power source is by using the contact structure described in co-pending U.S. patent US-A-5 657 150 filed January 13, 1994 entitled ELECTROCHROMIC EDGE ISOLATION-INTERCONNECT SYSTEM, PROCESS AND DEVICE FOR ITS MANUFACTURE. This application incorporates by reference both the disclosure of the immediately preceding co-pending patent application, and the disclosure of co-pending patent US-A-5 900 720 filed September 10, 1993 entitled MICRO-ELECTRONIC POWER SUPPLY FOR ELECTROCHROMIC EYEWEAR. Both of the referenced patent applications are subject to common ownership herewith.

Generally speaking, the two ITO electrode layers are each connected to a separate bus bar to compensate for voltage drop across the electrodes. A preferred thickness range for each ITO layer is about 200-350 nm, and preferably about 200 nm. The required thickness increases as the ECD area and switching speed increase. The bus bar configuration is preferably constructed of two metal bars, each of which is connected to opposite sides of the ECD, and each are shaped with a geometry suitable for the ECD to provide the smallest voltage drop across the electrodes. The effect of such a configuration is to provide for uniform coloring and bleaching action.

Referring generally to Fig. 1, EC composite system 10 is shown formed as a series of successive layers extending to the right of the substrate. A right side 10a of EC composite system 10 may also be thought of as a top surface of that material, and a left side 10b may also be thought of as a bottom surface of that material. Likewise, for each layer of EC composite system 10, the right side may also be thought of as the top surface, and the left side may also be thought of as the bottom surface. It should also be understood that the to-be-described method used in the invention can be used to make an ECD as shown in Fig. 1, either starting from the substrate and depositing successive layers on it, or starting from the OC layer and depositing successive layers on it in reverse order from what is about to be described.

It should also be understood that any known, suitable thin-film deposition technique may be used to form the to-be-described layers of the EC system of the present invention. Those techniques may include evaporation, ion/plasma assisted evaporation, sputtering, chemical vapor deposition, electrochemical deposition, spray pyrolysis, sol gel, or microwave-enhanced techniques.

With the above details in mind, it should now be apparent that Fig. 1 shows a monolithic, multi-layer electrochromic composite system 10 usable in an ECD that has an optical substrate and contacts 12, conductor structure 14 connected to power supply 16. System 10 is positionable on the optical substrate and connectable to the power supply via conductors 14, and power input results in system 10 changing from a substantially colorless transparent condition to a substantially colored transparent condition.

It should also be understood that system 10 could be formed, according to the to-be-described method used in the invention, on a reflective surface rather than an optical substrate so that system 10 could be used in an ECD mirror device. Of course the essential feature for the mirror device is a reflective surface positioned behind the ECD, i.e. over the substrate before system 10 is deposited. The reflective surface is obtained either by metallization of the to-be-deposited surface of the substrate, or by replacing the first ITO with a reflective metal film. A preferred metal film is a suitable grade of Ag or Al.

Referring again to system 10, the following layers are the preferred plural outer layers: $SiO_x$, $SiO_2$, ITO #1, ITO #2, and OC. The EC may also be referred to as a central electrochromic layer, the EL as a central electrolyte layer, and the IS as a central ion-storage layer. $SiO_x$ may also be called a first outermost layer, where x is in the range of 1.3 to 1.8, and has a thickness in the range of about 7-9 nm (8 nm). ITO #2 may also be called a second outermost layer and, as will be described, it is preferably suitably spin-coated with a pin-hole free polyurethane polymer coating. Alternately a protective inorganic overcoating could be applied such as for example a hard coating like SiOx (x $\sim$ 1.6), $Si3N4$, $Al_2O_3$. Another alternate would be to protect composite system 10 using lamination of the material with another glass substrate, i.e. to sandwich system 10 between to glass substrates. $SiO_2$ may be thought of as a first inner layer which is formed over the first outermost layer. That $SiO_2$ layer has a preferred thickness in the range of about 2000-3000 nm (2,500 nm). ITO #1 may also be called a second inner layer formed between the EC layer and the first outermost layer ($SiO_x$).

At the interface between the EL and IS, and EL and EC, there is buffer-layer material coextensive with the top and bottom surfaces of the EL As will be described, each buffer layer is made from a material that improves bidirectional charge transfer between the electrochromic layer and the ion-storage layer. The buffer-layer material is formed as dual buffer layers sandwiching the electrolyte layer, and each buffer layer is formed from a substance chosen from the group consisting of LiF and $V_2O_3$. Each buffer layer has a preferred thickness in a range of about 5-20 nm and preferably of about 10-15 nm. The buffer layer at the interface of the EL and IS may be thought of as a first buffer layer coextensive with the top surface of the EL layer, and the buffer layer at the interface of the EL and EC may be thought of as a second buffer layer coextensive with the bottom surface of the EL layer.

Contacts 12 are connected to system 10 preferably, via ITO #1 and ITO #2, and connectable to conductors 14 to allow power-input from power supply 16.

Referring to the active element, i.e. the EC/EL/IS layers, the EL layer is a solid inorganic material, preferably made from $LiAlF_4$, and preferably with a thickness of about 800 nm. Viewing the EL layer as the multi-layered EL of the invention, it has a central EL sublayer that is preferably formed from amorphous, thermally evaporated, $LiAlF_4$, a molecular ionic solid, and has a thickness in the range of about 100-2,000 nm. Opposing outer sublayers are formed on the top and bottom of the central EL sublayer, and each is formed from LiF in thicknesses of 10-15nm.

The EC layer is a microporous, thermally evaporated, amorphous, oxygen-deficient, colorless $WO_{2.98}$ layer, reduced from $WO_3$ by adding $WO_{2.9}$ or a reducing agent such as high-oxygen-affinity EC oxides like $BiO_x$, $PbO_x$, or $CoO_x$. The EC layer is preferably formed by $WO_x$ tablets made from a mixed powder of $WO_3$ (pale yellow powder) and powder of $WO_{2.9}$ (black powder), and where $2.9 < x < 2.99$ (preferably 2.95). Mixing, preferably by hand, is performed with suitable tools such as a mortar and pestle, and mixing should produce a uniform color. The EC layer is provided in a thickness in the range of about 200-600 nm. To preserve its microporosity, a high rate of deposition and/or a high pressure of background gas is preferred during deposition, regardless of the specific deposition technique used. E-beam or sputtering deposition could be used instead of thermal evaporation.

As used herein, the terms porous structure, microporous, microporosity, or optical density are defined as the volume ratio of a given volume of material as a fraction of the total volume of that material + air or void spaces existing within it, e.g. 80% optical density means 80% of the total volume is filled with a material while the remainder, 20%, is made up of air.

In a 250nm thickness, the EC layer can hold over 15 mC/cm2 of charge, and exhibits a coloring efficiency of about 43 $cm^2$/C. For purposes of the invention, coloring efficiency, or C.E., is defined as the change in color, maximum transmission ($T_{max}$) and minimum transmission ($T_{min}$), measured in Log scale and divided by the total charge, $Q_{tot}$, injected in the EC or IS active layers, and given by the following formula:

$$|log(Tmin/Tmax)|/Qtot$$

As will be described further below, examples of system 10 using the preferred EC layer exhibited coloring and bleaching about 1-million cycles without substantial change of properties. An EC layer formed in the preferred manner and having about a 600nm thickness, exhibits pale blue color and is substantially colorless for 200nm. Such an EC layer is amorphous and porous with an optical density of 0.8. A 250nm thickness of such EC with 15mC/cm2 of charge exhibits dark blue color with 18% transmissivity. Other suitable alloys/treatments of $WO_3$ could also be used in the EC system of the present invention.

The IS layer is deposited as a microporous, nonhygroscopic, amorphous or crystalline layer of $VO_x$, in a preselected color, where $2.0 \leq x \leq 2.5$, and preferably $2.45 \leq x \leq 2.5$, and $VO_x$ is preferably $VO_{2.47}$. The IS layer is deposited using ion- or plasma-assisted evaporation, or similar technique. The resulting IS layer has a coloring efficiency of about 2.3 $cm^2$/C. The thickness of $WO_{2.98}$ and $VO_x$ are in a range of 200-600nm and 100-400nm, respectively, and preferably 350nm and 250nm, respectively.

### 1. **The cumulative properties of the EC composite system of the invention.**

In addition to the single layer properties of each layer of EC composite system 10, the cumulative properties in the overall composite are also important and may be summarized as follows:

a.) bottom ITO electrode: 1) two-layer structure, 2) particle-free, and 3) stress-free on $SiO_x$ or $SiO_x/SiO_2$;

b.) $WO_x$: 1) x is preferably 2.98, 2) microporous structure with a luminous transmittance of over 80%, 3) low-stress on ITO electrode, 4) particle-free, 5) cycles more than about one million times in an ECD, 6) coloring efficiency of 43 $cm^2$/C;

c.) buffer/LiAlF4/buffer electrolyte system: 1) low-stress film on $LiWO_x$ (blue EC), 2) humidity insensitive, 3) low resistance to charge transfer from EC/EL and IS/EL interfaces, 4) particle-free, 5) high electronic resistance with about one month memory for 800nm thick film, 6) adjustable memory by adjusting the film thickness e.g. 600 nm thick EL system provides 18 hours memory;

d.) Li loading: 1) loading of $WO_x$ provided by thermal evaporation of Li source, 2) loading rate should correspond to diffusion rate of lithium into $WO_x$ layer, 3) substantially no degradation on $WO_x$ layer after loading;

e.) $VO_x$: 1) humidity insensitive, 2) low-stress on EL system, 3) particle-free, 4) minimum coloring efficiency e.g. 2.3 $cm^2$/C, 5) cycles about one million times in an ECD;

f.) top ITO electrode: 1) low-stress ECD system, 2) ECD with long-term color memory, 3) particle-free film;

g.) overall performance of ECD: 1) coloring 44% luminous transmittance change, and 2) 41 $cm^2$/C coloring efficiency for an ECD utilizing EC composite system 10.

With respect to the property of color memory, good color memory of an ECD is defined as a color fading rate of 10 days or more. Such a rate corresponds to about $\leq 1$ micro ampere of leakage current. Acceptable or medium color memory is exhibited in an ECD with a color-fading rate of about 1 day, corresponding to about 10-50 micro Amps of leakage current. Poor or no color memory is exhibited in an ECD with a color-fading rate of about a few minutes, corresponding to a leakage current at a mAmps level.

**2. The importance of EL buffer material.**

The EL layer in EC composite system 10 contacts intimately to the EC and IS layers at both sides, through ion-transfer-facilitating buffer layers. In general, the Li+ loading level was 5-30 mC/cm$^2$ and preferably 15 mC/cm$^2$ to obtain the desired optical modulations, color, and stability in an ECD with material 10. The EL layer consists of a graded or layered system of buffer/EL/buffer with LiF or LiTaO$_3$ buffers and either LiAlF$_4$ or LiTaO$_3$ EL material. The thickness of the EL material is in the range of 100nm-2000nm, and preferably 800-850nm.

**3. The multi-layered EL used in the invention.**

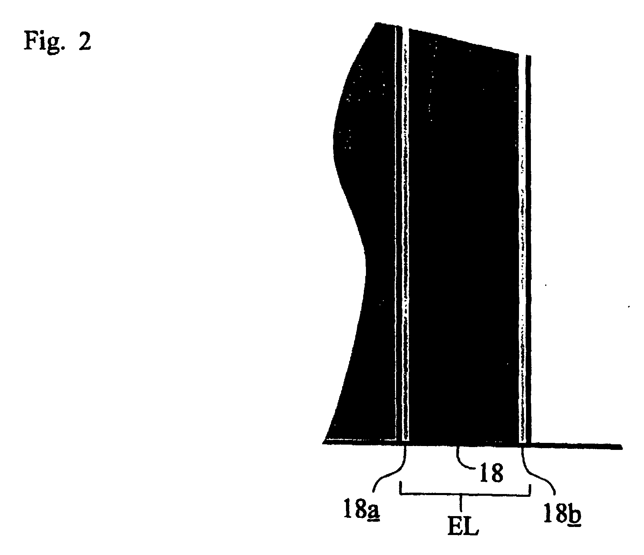

Referring to Fig. 2, another way to view the preferred configuration of the EL layer is to think of it as a composite EL formed with a LiAlF$_4$ central sublayer 18 and opposing outer sublayers 18a-b of LiF. The resulting composite EL material is electrically insulating, and ionically conducting. It also provides for substantially enhanced ion-transport kinetics and device durability by avoiding interface degradation which can result from poor ion-transport both during deposition of the device, and during prolonged operation under a wide range of environmental conditions.

The goal in a monolithic solid-state ECD is to have a transparent EL with fast kinetics and good durability. The multi-layered EL of the present invention achieves this goal by providing a highly stable composition under varied environmental conditions. The multi-layered EL of the invention may also be formed with non-stoichiometric forms of LiAlF$_4$, generally Li$_x$Al$_y$F$_z$.

The multi-layered EL of the invention overcomes certain problems associated with prior art systems. Specifically, conventional proposals for forming monolithic devices have failed because, during deposition of the IS layer, the Al in a conventional LiAlF$_4$ EL layer is oxidized. As a result, the EL layer is irreparably damaged structurally and chemically, which negatively affects its associated kinetics and optical performance when used in an ECD so that there is an optical performance change from seconds to minutes for a color change. It can also negatively effect the optical performance with haze or mottling as evidence of blocked-ion transfer.

In addition, the LiF sublayer on the W03 side of the multi-layered EL imparts substantially increased cycle durability so that an ECD with the multi-layered EL can endure over between 10,000 and one million color cycles. That ECD also becomes stable at a higher coloring and bleaching voltage of -2.4V coloring and + 1.1V bleaching as opposed to conventional values of -1.8V coloring and +.8V bleaching.

To summarize, the LiF sublayer at the IS-layer side functions to protect the outer surface of the EL layer during deposition of the IS layer, and during operation of the overall ECD. The LiF sublayer at the WO$_3$-layer side protects the ECD from degradation due to corrosion of the surface of the WO$_3$ layer, presumably due to entrapped water.

**4. Certain alternative IS layers used in the invention.**

A novel, optically passive, clear IS layer can be formed from Tin Vanadium Oxide (TVO). This material exhibits light gray or light yellow color depending upon the oxidation level and concentration of SnO$_x$/VO$_y$. An ECD using TVO as an IS layer exhibited EC material switching from a deep blue-gray (20%) to colorless (68%) in about 30 sec.

TVO is a binary system, i.e. it is a nanocomposite of SnO$_2$ and VO$_x$. The concentration, c, of (SnO2)c=(VOx) 1-2 is around 50%. The range of C is 10%<c<90%. The concentration of a SnO$_2$/V$_{2.3}$O$_5$ nanocomposite layer was controlled by the co-deposition rate of individual materials. The color of the resulting TVO layer is pale yellow, depending on the concentration of SnO$_2$. The yellow color is stronger with a decreasing c value. There is a special TVO which is nearly colorless with c=30% of SnO2 component, and exhibits nearly 4% of anodic behavior e.g., it is more transmittive when it is loaded with lithium. For other c values, TVO is a neutral IS layer. A 250-nm thick film of TVO can be loaded and unloaded with 15 mC/cm2 charge that is reversible without substantial degradation. Optical transmittance is about 77% in the visible spectral region for an unloaded TVO layer and transmittance increases to 80% when it was loaded with 15mC/cm2 of charge. In other words, TVO shows a slightly anodic behavior upon charging for 70% of SnO2 and 30% of V$_2$O$_5$. TVO is a neutral IS layer for a higher concentration of V$_2$O$_5$ concentration relative to SnO2.

Another novel IS layer may be formed from two sublayers. The two sublayers are VO$_x$/TVO, and they provide large optical modulations and effective gray color.

Another new anodic IS layer may be formed from Pr$_2$O$_3$. A film of PrO$_x$ was deposited in a thickness of 200 nm and, when incorporated into material 10 and ultimately an ECD, it exhibited a dark brown color with 38% of visible transmittance. Upon injection of 10 mC/cm2 of charge, this IS layer cleared to about 78% visible transmittance.

**5. Special versions of ITO #1.**

ITO #1 may be formed of first and second sublayers, which sublayers are used to control conductivity as the grains develop. The first and second sublayers tend to maintain optimum conductivity and optical transmission throughout film thickness. Referring to deposition of a thin film generally, when a thin film is nucleated and microstructure develops thickness, the deposition parameters change. By having two sublayers rather than a single one, the process addresses the change in such deposition parameters. The first sublayer is formed from tin oxide and indium oxide. By changing the relative percentages of the two components, the second sublayer is formed having a different composition. Examples of deposition parameters that are subject to change when film thickness is forming include deposition rate, oxygen partial pressure, and plasma power. By changing these parameters, and by using different relative percentages of tin oxide and indium oxide, the first and second sublayers are formed. Again, formation of these two sublayers provides crystalline structures that promote conductivity.

With respect to either ITO layer generally, it should be understood that any suitable metal electrode layer could be used as a substitute for each ITO layer.

**6. Examples of EC composite systems of the invention.**

In the following examples, the area of all regular ECDs e.g. those in examples I - VIII, is $25cm^2$, a 5cm X 5cm square. In a large-area ECD example, i.e. Example IX, a 196 $cm^2$ was used, a 14cm X 14cm square.

Reference Example I

A five-layer/six-step EC composite system was deposited as described below:

$$glass/SiOx(80nm)/ITO(200nm)//WO_{2.96}(300nm)/Li+(15mC/cm^2)/LiF(15nm)/$$

$$LiAlF_4(800nm)//VO_x(200nm)/ITO(200nm)$$

The layer thicknesses are shown above. The color of the material switches between deep gray-green, 15% and light gray-brown, 56%. Switching voltages and times for coloring were: -1.8 volts and one minute, and for bleaching were: 0.8 volts and one minute respectively. The color memory of this ECD was in the range of several days. An ECD with this material was switched back and forth 10,000 of times without substantial degradation.

Example II

The material in Example 1 was repeated except an additional 10nm thick layer of $V_2O_3$ buffer layer was deposited on the $LiAlF_4$ layer before deposition of $VO_x$ layer. Using the material in an ECD, the ECD was switched between the same colors mentioned in example 1, and with the same voltages between 14% of minimum and 54% of maximum transmittance range with 20 sec. of switching time. The color memory was in the range of several days and the ECD showed acceptable cycling performance.

Example III

The material of example II was deposited except the $V_2O_3$ layer was replaced with a 15nm thick LiF layer. Using the material in an ECD, the ECD was switched with the same colors described in example 1, and with the same voltages between 15% and 58% of visible transmission range with 15 seconds of switching time. The color memory was in the range of several days. The sample cycled approximately one million times without substantial degradation.

Example IV

The same material of example III was deposited simultaneously on both glass and CR-39 substrates except that the substrates were coated with 70nm SiOx adhesion layer and 2500nm thick SiO2 films. Each material showed the same optical performance obtained on glass substrate.

Example V

The material of example II was coated with a layer of polyurethane as described above. Using the material in an ECD, the ECD was cycled under 50°C water for 10 minutes and 5 times immersed in ice water and then boiling water. There was no substantial degradation in optical performance.

Example VI

The material of Example III was prepared except that a 250 nm thick layer of TVO (c=30%) was substituted for the $VO_x$ layer. The maximum and minimum transmittances of an ECD using the material were 65% and 14% respectively. The ECD was switched between colorless and grayish blue colors. 10,000 cycles were performed without substantial degradation. The switching time of the ECD was about 25 sec., and the color memory was approximately 6 hours.

Reference Example VII

The material of Example I was used except that the $VO_x$ layer was replaced with a $PrO_x$ layer, and the total charge in the system was 10 mC/cm2. Using this material in an ECD, the ECD exhibited 62% and 7% of maximum and minimum visible transmittances respectively. The initial switching rate was approximately 40 sec. That rate slowed down to approximately 1-2 minutes after 30-50 cycles upon deep cycling (5 minutes under coloring or bleaching voltage conditions), but it exhibited acceptable color memory after 2000 cycles for shallow cycling attention.

Example VIII

The material was prepared as in Example III except that (1) a $VO_x$ layer was 120nm thick, (2) a second IS layer of $(SnO_2)_{0.7}$-$(VO_x)_{0.3}$ was deposited in a thickness of 120nm on top of the first $VO_x$ layer. Using the material in an ECD, the ECD included 16mC/cm$^2$ of charge of lithium. In the bleached state, the ECD exhibited substantially no color with 61% visible transmission. In the colored state, the ECD exhibited a bluish-gray color and 15% visible transmission. The ECD was cycled approximately 10,000 times without a detectable change in optical performance properties. The ECD exhibited a 25 sec. switching rate, and an acceptable color memory. $VO_x$ functioned as a color-compensating element, and TVO functioned as an excess-charge-storing-neutral IS layer. The ECD exhibited 46% optical modulation.

Example IX

An ECD was deposited as described in Example III except the area of this material was 196cm$^2$ (a 14cm X 14cm square), which area is the largest uniform deposition area capable with the APS 904 box coater. This example performed similarly to the one in Example III. However, the large area one was four times slower in its switching rate. By using copper conductive tape as a bus bar, the switching rate increased by about four times to that comparable with Example III.

Operation and Preferred Mode of Practicing

System 10 is formed in a suitable chamber, or one meter box coater, preferably like the one known as the APS 904 from Leybold Technologies Inc. That box coater provides an advance plasma source and is based on argon. Within that box coater is an electron beam evaporator which is usable for dry loading of mobile ions as will be described below. Additions to the APS 904 box coater that are necessary for the to-be-described dry loading of mobile ions are: (1) a suitable high intensity halogen lamp (such as those available from the General Electric Corporation), and (2) a suitable silicon photodetector.

The deposition of the component layers of material 10 is preferably carried out at no higher than 70-75°C centigrade to allow for mounting the material on a variety of substrates including plastic ones.

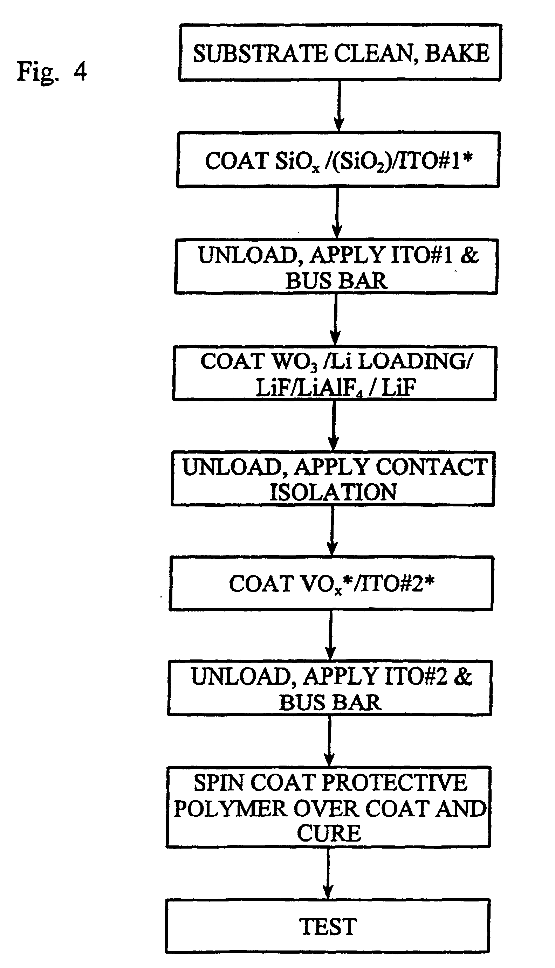

Referring now to Fig. 4, a preferred, typical process of forming material 10 will be described by describing from top to bottom the flow diagram boxes in Fig. 5. Boxes in Fig. 5 that are below the top box will be referred to as the second box (immediately below top box), third box (immediately below second box), etc. Where the * is shown, a plasma- or ion-assisted deposition substep is required as will be described. Without such a substep, the desired material properties are not achieved.

With respect to the process steps of Fig. 4 generally, the following deposition techniques were used for specified layers: (1) electron-beam evaporation for the to-be-described dry-loading of mobile ions (preferably lithium), and for the IS ($VO_x$) layer and the $SiO_2$ layer, (2) conventional spin coating on conventional spin-coating apparatus out of the chamber for the OC layer, and (3) thermal evaporation for all other layers.

First, referring to the top box in Fig. 4, a desired substrate such as glass or transparent plastic is chosen depending on the application for material 10. That substrate is then cleaned and baked using suitable methods, such as washing with an ultrasonic, aqueous detergent, rinsing with de-ionized water, and baking for about 1-hour at 80°C. The idea is to provide a suitably clean and dry surface.

Next, referring to the second box in Fig. 4, a coating of $SiO_x$ (where x is in the range of 13 to 1.8) is deposited in a thickness in the range of bout 7-9 nm (8 nm). Next a layer of $SiO_2$ is deposited in a thickness in the range of about 2000-3000 nm (2,500 nm). Next, a layer of ITO #1 is deposited in a thickness of about 100-300nm, preferably 200nm. During deposition of the ITO #1 layer, a plasma treatment is performed on the top, growing surface of the ITO #1 layer using the APS in the APS 904 box coater. Treatment is carried out preferably in a range of 60-85 amps of discharge. Such treatment promotes crystallinity and conductivity.

Referring to the third box in Fig. 4, the box coater is opened (to atmosphere) and the partially formed composite material is unloaded to apply a bus bar to ITO #1. A bus bar is applied to ITO #1 to augment the conductive properties of ITO #1. The bus bar is a nontransparent, highly conductive metal or ink. For applications of system 10 where transparency is important (e.g. eyewear, automobile glass), the bus bar must be placed on a side surface of the material that is out of the path of light through the material. In other words, as shown in Fig. 1, the bus bar, like contacts 12, would be out of the path of light through system 10 as shown by arrow A. Essentially, the bus bar augments the conductivity of the ITO layers by providing line rather than point contacts for current flow. With respect to bus bars in generally, a suitable length is dictated by the application, i.e. a relatively short bus bar is required for eyewear or other relatively small area ECD applications, and a relatively long bus bar is required for automobile glass or other relatively large area ECD applications.

Next, referring to the fourth box in Fig. 4, the material is returned to the chamber, the chamber is closed and the system is put under vacuum until it reaches a desired base pressure of about $10^{-6}$ torr. A layer of EC material, preferably $WO_3$, is then deposited in a thickness of about 200-600nm. Next, a substep of dry loading of mobile ions, preferably lithium ions, is performed. The term dry loading is used to distinguish that feature of the invention from conventional mobile-ion loading techniques such as "wet" loading, i.e. loading of mobile ions by depositing them onto a desired surface electrochemically in a liquid solution. Referring to Fig. 4, that substep is performed by placing a suitable amount of solid lithium, preferably high purity (99+ % pure) lithium, in the electron beam evaporator. The partially formed EC composite material is suitably placed over the evaporator, and lithium ions in the lithium vapor will become deposited on the outer surface of the $WO_3$ layer. As a preselected amount of lithium ions, preferably about 35 equivalent nm, is deposited on the $WO_3$ layer, the illuminated photodetector current will decrease until a level is reached corresponding to the desired color, i.e. blue, and to a Li loading level of approximately $15mC/cm^2$. Next, successive layers of the multi-layered EL of the invention are deposited, the LiF layers in a thickness of about 10-15 nm, and the $LiAlF_4$ in a thickness of about 100-2,000 nm.

Referring to the fifth box in Fig. 4, the partially formed composite material is again unloaded from the APS 904 box coater, and the edge isolation contact is applied as described by the above-identified patent applications that are incorporated herein by reference.

Referring to the sixth box in Fig. 4, an IS layer is deposited such as $VO_x$ in a thickness of about 100-400nm. As noted by the *, there is another suitable plasma treatment during the deposition of the $VO_x$ layer. Next, a layer of ITO #2 is deposited in a suitable thickness, and again another suitable plasma treatment of the surface during the deposition of the ITO #2 layer is performed.

Referring to the seventh box in Fig. 4, the box coater is again opened and the partially formed composite material is unloaded to apply a bus bar to ITO #2.

Referring to the eighth box in Fig. 4, the OC layer (preferably two sublayers as described above) is spin coated on the surface of the treated ITO #2 layer, and the OC layer is allowed to cure.

Referring to the ninth box in Fig. 4, the now formed composite system 10 is ready for testing such as conventional cycling testing, durability testing, and environmental testing.

By "unload" in Fig. 4, it should be understood that the chamber is opened to atmosphere. Specifically, the chamber is opened at the following times: (1) before deposition of the $WO_3$ layer, (2) before deposition of $VO_x$ layer, and (3) after deposition of the ITO #2 layer.

With respect to dry loading of mobile ions such as lithium ions, that loading can be performed for each or both the EC ($WO_3$) and IS ($VO_x$) layers, and the preferred way is for only the $WO_3$ layer. The optimum dry-loading rate must be slow enough to provide for diffusion of lithium ions into the $WO_3$ layer, but also must be fast enough to avoid the formation of lithium byproducts such as $LiO_x$, and LiOH.

With respect to the plasma treatment substep generally, it: (1) removes all weakly bonded features on the to-be-treated surface, i.e. moisture, dust, dirt, etc., (2) reduces the to-be-treated surface to improve adhesion to the to-be-deposited layer of material, and (3) provides kinetic energy to growing surfaces during deposition to improve crystallinity and to control stoichiometry at low deposition temperatures of less than 70° C.

The smoothness of the surfaces of each layer is important during the composite formation process because of relatively rough surfaces could result in undesired charge transport (i.e. leakage current which results in an ECD with poor persistence, heterogeneous local electrical fields, and particles/regions of the surface which lead to short circuits. The size of the surface defects should be less than the thickness of the EL layer to avoid these problems.

By following the above process, it is possible to form system 10 on a substrate without substantial delamination. Such a feature is possible because system 10 is a low-stress composite material. To minimize stress and delamination, special focus must be given to the stress profile for each layer.

It should also be understood that the above process may be performed in reverse order with the OC layer being formed first and the substrate being applied last. To deposit the active element of the ECD in reverse order to that described above would be as follows: ITO #1/IS/LiF/EL/LiF/EC/ITO#2. In such an "upside down" version of system 10, dry-loading of lithium can be performed on the IS layer. Such dry-loading of lithium could be applied on the first active layer, second active layer, or on both in equal concentrations.

With respect to the process and EC system of the invention generally, the EC system achieves the above-identified objects of the invention by virtue of electrochemical stability and moderate lithium activity. This is in contrast with a high energy lithium battery. An ECD device using system 10 can function durably with coexistence of both mobile lithium and mobile protons present in the operating device. Conventional monolithic devices cannot so function. The reason both mobile lithium and mobile protons are present in system 10 is because it is impossible to deposit oxide materials using chemical and thin-film techniques such that the deposited material is entirely devoid of water or entrapped protons.

With system 10 being used in an ECD, mobile lithium ions are the dominant charge carriers that affect color change as they migrate through the ECD under applied power. Those lithium ions are able to "breath" in system 10 allowing the concentration of protons to fluctuate with environmental humidity and temperature without degrading the ECD. In other words, an ECD based on system 10 is stable in air. Such movement or breathability of mobile lithium ions in system 10 allows an ECD based on system 10 to function equally well in ambient atmosphere and in dry, inert gas atmosphere such as is found in argon-filled, double-pane thermal-insulating window units. Conventional devices that are proton-dependent (e.g. those that use a LiNiO counterelectrode) start losing all their mobile charge in a dry atmosphere, and are therefore nonfunctional in such an atmosphere. Other conventional ECD's with less stable EL layers than that achieved by the present invention (e.g. lithium metal oxide EL layers in conventional ECD's) oxidize irreversibly when formed monolithically and operated in ambient atmosphere unless extreme measures are taken such as glass lamination being employed to protect the device.

The EC system of the present invention is stable in air because the above process recognizes the importance of loading lithium ions in a concentration below that corresponding to the electrochemical potential of lithium which would substantially react with moisture when the lithium is loaded in a given material such as $WO_3$. In other words, a key feature of the process is to recognize a threshold concentration level of lithium in the $WO_3$ layer at which lithium would substantially react with moisture in air. Depending on the host material, for system 10 the host is preferably $WO_3$, the reaction rate of lithium with water to produce LiOH and H + will vary. Using conventional coulometric titration techniques, one can determine the threshold concentration level of lithium.

For system 10, the preferred range of lithium ion concentration is corresponds to $15mC/cm^2$, or preferably about 35 equivalent nm of lithium.

An ECD based on system 10 functions topotactically, i.e. phase-change free, in that it allows reversible insertion and deinsertion of mobile lithium ions into the electrode, EC and IS layers without undesired chemical structural changes in system 10.

Industrial Applicability

Although particularly well-suited for use in eyewear and automobile glass, the above-described electrochromic composite system is useful in other applications including mirrors.

Accordingly, while a preferred embodiment of the invention has been described herein, it is appreciated that modifications are possible that are within the scope of the invention as defined by the claims.

**Claims**

1.  A monolithic, multi-layer electrochromic composite system (10) capable of transmitting light and usable in an electrochromic device that has an optical substrate and conductor structure connected to a power supply, with the system being positionable on the optical substrate and connectable to the power supply via the conductor structure, and with power input resulting in the system changing from a substantially colourless transparent condition to a substantially coloured transparent condition, comprising:

    a central electrochromic layer (EC); a central electrolyte layer (EL) with a top and bottom surface; a central ion-storage layer (IS); buffer-layer material (18a, 18b) coextensive with the top and bottom surfaces of the electrolyte layer (EL) and formed as dual buffer layers sandwiching the electrolyte layer, with each buffer layer (18a, 18b) being made from a material that improves bi-directional charge transfer between the electrochromic layer (EC) and the ion-storage layer (IS); an effective supply of mobile ions located in the ion-storage layer (IS); and contact structure (12) connected to the layers and connectable to such conductor structure (14) to allow such power-input,

**characterized in that** each buffer layer is formed from a substance chosen from the group consisting of LiF and $V_2O_{3x}$ and **in that** the system further comprises plural outer layers.

2. The system of claim 1 wherein the electrolyte layer is made from $LiAlF_4$.

3. The system of claim 2 wherein each buffer layer has a thickness in the range of about 10-15 nm.

4. The system of claim 3 wherein the electrolyte layer has a thickness of about 800 nm.

5. The system of claim 1 wherein the supply of mobile ions is a concentration of lithium ions.

6. The system of claim 5 wherein the concentration of lithium ions is below the concentration at which lithium will substantially react with moisture in the electrochromic layer.

7. The system of claim 1, wherein the system is thermal-shock resistant, the plural layers are opposing first and second outermost layers; the central electrochromic layer is positioned closer to the first outermost layer than to the second outermost layer; the central electrolyte layer is positioned closer to the second outermost layer than to the first outermost layer; a first ITO layer (ITO#1) is positioned between the first outermost layer and the electrochromic layer; the ion-storage layer is positioned between the second outermost layer and the electrolyte layer; the buffer-layer material is comprising a first buffer-layer coextensive with the top surface of the electrolyte layer and a second buffer layer coextensive with the bottom surface of the electrolyte layer, and with each first and second layer being made from a material that improves bi-directional charge transfer between the electrochromic layer and the ion-storage layer.

8. The system of claim 7 wherein the first outermost layer includes $SiO_x$ where x is in the range of 1.3 to 1.8, and the first outermost layer is provided in a thickness in the range of about 5-10 nm.

9. The system of claim 7 wherein the second outermost layer is formed from ITO.

10. The system of claim 8 wherein there is a first inner layer formed over the first outermost layer, with the first inner layer being formed of $SiO_2$ and being provided in a thickness in the range of about 2000 - 3000 nm.

11. The system of claim 7 or 10 wherein there is a second inner layer formed between the electrochromic layer and the first outermost layer, and the second inner layer is formed of ITO.

12. The system of claim 10 wherein the second inner layer is formed as first and second sublayers, with the first and second sublayers being formed with crystalline structures that promote conductivity.

13. The system of claim 7 wherein the electrochromic layer is formed from $WO_x$ where $2.9 \leq x \leq 2.99$, and the electrochromic layer is provided in a thickness in the range of about 200 - 600 nm.

14. The system of claim 7 wherein the electrolyte layer is formed from $LiAlF_4$ and provided in a thickness in the range of about 100 - 2,000 nm.

15. The system of claim 7 wherein the ion-storage layer is formed as a porous $VO_x$ material that has a colouring efficiency of about $2,3\ cm^2/C$ in a preselected colour, with the colouring efficiency being defined as the change in colour, maximum transmission $T_{max}$ and minimum transmission $T_{min}$, measured in Log scale and divided by the total charge, $Q_{tot}$, injected in the electrochromic or ion-storage layers, and given by the following formula: $|log(T_{min}/T_{max})|/Q_{tot}$; and wherein $2,45 \leq x \leq 2,5$, wherein the $VO_x$ material is formed from a starting material of $V_2O_5$ powder that is pressed into a body to prevent spitting and wherein the $VO_x$ material is formed in a thickness in the range of 100 - 400 nm.

16. The system of claim 7 wherein the second outermost layer is spincoated with a pin-hole-free urethane polymer coating.

17. The system of claim 7 wherein the supply of mobile ions is lithium ions.

18. The system of claim 17 wherein the supply of lithium ions has a concentration that is below the concentration at which lithium will substantially react with moisture in the electrochromic layer.

19. The system of claim 7 wherein each of the first and second buffer layers has a thickness in the range of about 10 - 15 nm.

20. The system of claim 1, wherein the plural outer layers are opposing first and second outermost layers; the central electrochromic layer is positioned closer to the first outermost layer than to the second outermost layer; the central composite electrolyte layer positioned closer to the second outermost layer than to the first outermost layer, and the composite electrolyte layer being formed from a central electrolyte sublayer of $LiAlF_4$ and opposing sublayers of LiF sandwiching the central electrolyte sublayer; a first ITO layer is positioned between the first outermost layer and the electrochromic layer; the ion-storage layer is positioned between the second outermost layer and the electrolyte layer.

21. The system of claim 20 wherein the composite electrolyte layer is formed with a central electrolyte sublayer in a thickness in the range of about 100 - 2,000 nm and with opposing sublayers each in a thickness in the range of about 10 - 15 nm.

22. The system of claim 1, wherein the electrochromic device is an electrochromic mirror device and the optical substrate is a reflective substrate, the plural outer layers are opposing first and second outermost layers; a central electrochromic layer is positioned closer to the first outermost layer than to the second outermost layer; the central composite electrolyte layer is positioned closer to the second outermost layer than to the first outermost layer, and the composite electrolyte layer being formed from a central electrolyte sublayer of $LiAlF_4$ and opposing sublayers of LiF sandwiching the central electrolyte sublayer; a first ITO layer is positioned between the first outermost layer and the electrochromic layer; the ion-storage layer is positioned between the second outermost layer and the electrolyte layer.

**Patentansprüche**

1. Monolithisches, mehrschichtiges, elektrochromisches Verbundsystem (10), welches in der Lage ist, Licht auszusenden und in einer elektrochromischen Vorrichtung verwendbar ist, welche ein optisches Substrat und eine mit einer Energieversorgung verbundene Leiterstruktur aufweist, wobei das System auf dem optischen Substrat positionierbar und mit der Energieversorgung über die Leiterstruktur verbindbar ist und wobei eine Energiezuführung an das System dazu führt, daß dieses von einem im wesentlichen farblosen, transparenten Zustand in einen im wesentlichen farbigen, transparenten Zustand wechselt, folgendes umfassend:

   eine zentrale, elektrochromische Schicht (EC); eine zentrale Elektrolytschicht (EL) mit einer Oberseite und einer Unterseite; eine zentrale lonenspeicherschicht (IS); ein Pufferschichtwerkstoff (18a, 18b), welcher sich mit der Oberseite und Unterseite der Elektrolytschicht deckt und als zwei die Elektrolytschicht zwischen sich einschließende Pufferschichten ausgebildet ist, wobei jede Pufferschicht (18a, 18b) aus einem Werkstoff hergestellt ist, der einen bidirektionalen Ladungstransfer zwischen der elektrochromischen Schicht (EC) und der lonenspeicherschicht (IS) verbessert; eine effektive Quelle von mobilen lonen, die in der lonenspeicherschicht (IS) angeordnet ist, und eine Kontaktstruktur (12), welche mit den Schichten verbunden und derart mit der Leiterstruktur (14) verbindbar ist, daß eine derartige Energiezuführung ermöglicht ist,

   **dadurch gekennzeichnet,**
   **daß** jede Pufferschicht aus einer der Substanzen LiF und $V_2O_3$ hergestellt ist und daß das System ferner mehrere äußere Schichten umfaßt.

2. System nach Anspruch 1, **dadurch gekennzeichnet, daß** die Elektrolytschicht aus $LiAlF_4$ hergestellt ist.

3. System nach Anspruch 2, **dadurch gekennzeichnet, daß** die Pufferschicht eine Dicke im Bereich von etwas 10 bis 15 nm aufweist.

**4.** System nach Anspruch 3, **dadurch gekennzeichnet, daß** die Elektrolytschicht eine Dicke im Bereich von etwa 800 nm aufweist.

**5.** System nach Anspruch 1, **dadurch gekennzeichnet, daß** die Ionenquelle eine Konzentration von Lithiumionen ist.

**6.** System nach Anspruch 5, **dadurch gekennzeichnet, daß** die Konzentration der Lithiumionen unterhalb derjenigen Konzentration ist, bei der Lithium im wesentlichen mit Feuchtigkeit in der elektrochromischen Schicht reagiert.

**7.** System nach Anspruch 1, **dadurch gekennzeichnet, daß** das System bzgl. thermischem Schock resistent ausgebildet ist, wobei die mehreren Schichten gegenüber einer ersten und zweiten äußersten Schicht liegen; daß die zentrale elektrochromische Schicht näher an der ersten äußersten Schicht angeordnet ist als an der zweiten äußersten Schicht; daß die zentrale Elektrolytschicht näher an der zweiten äußersten Schicht angeordnet ist als an der ersten äußersten Schicht; daß eine erste ITO-Schicht (ITO#1) zwischen der ersten äußersten Schicht und der elektrochromischen Schicht angeordnet ist; daß die Ionenspeicherschicht zwischen der zweiten äußersten Schicht und der Elektrolytschicht angeordnet ist; und daß die Pufferschicht eine sich mit der Oberseite der Elektrolytschicht deckende erste Pufferschicht sowie eine sich mit der Unterseite der Elektrolytschicht deckende zweite Pufferschicht aufweist, wobei die erste und zweite Schicht aus einem Werkstoff hergestellt sind, welcher einen bidirektionalen Ladungstransfer zwischen der elektrochemischen Schicht und der Ionenspeicherschicht verbessert.

**8.** System nach Anspruch 7, **dadurch gekennzeichnet, daß** die erste äußerste Schicht $SiO_x$ umfaßt, wobei x einen Wert im Bereich von 1,3 bis 1,8 hat und die erste äußerste Schicht eine Dicke im Bereich von etwa 5 bis 10 nm aufweist.

**9.** System nach Anspruch 7, **dadurch gekennzeichnet, daß** die zweite äußerste Schicht aus ITO ausgebildet ist.

**10.** System nach Anspruch 8, **dadurch gekennzeichnet, daß** über der ersten äußersten Schicht eine erste innere Schicht ausgebildet ist, die aus $SiO_2$ gebildet ist und eine Dicke in Bereich von etwa 2.000 bis 3.000 nm aufweist.

**11.** System nach Anspruch 7 oder 10, **dadurch gekennzeichnet, daß** zwischen der elektrochromischen Schicht und der ersten äußersten Schicht eine zweite innere Schicht ausgebildet ist, welche aus ITO gebildet ist.

**12.** System nach Anspruch 10, **dadurch gekennzeichnet, daß** die zweite innere Schicht aus erster und zweiter Unterschicht ausgebildet ist, die mit einer die Leitfähigkeit unterstützenden kristallinen Struktur aufgebaut sind.

**13.** System nach Anspruch 7, **dadurch gekennzeichnet, daß** die elektrochromische Schicht aus $WO_x$ ausgebildet ist, wobei $2,9 \leq x \leq 2,99$ ist, und die elektrochromische Schicht eine Dicke im Bereich von etwa 200 bis 600 nm aufweist.

**14.** System nach Anspruch 7, **dadurch gekennzeichnet, daß** die Elektrolytschicht aus $LiAlF_4$ hergestellt ist und eine Dicke im Bereich von etwa 100 bis 2.000 nm aufweist.

**15.** System nach Anspruch 7, **dadurch gekennzeichnet, daß** die Ionenspeicherschicht als poröser $VO_x$-Werkstoff mit einer Farbeffizienz von etwa 2,3 $cm^2/C$ in einer vorbestimmten Farbe ausgebildet ist, wobei die Farbeffizienz definiert ist als die Änderung der Farbe, maximale Transmission $T_{max}$ und minimale Transmission $T_{min}$, gemessen in logarithmischer Skala und geteilt durch die in die elektrochromische oder Ionenspeicherschicht injizierte Gesamtladung, $Q_{tot}$, und gegeben durch folgende Formel: $|log(T_{min}/T_{max})|/Q_{tot}$; und wobei $2,45 \leq x \leq 2,5$ ist, wobei der $VO_x$-Werkstoff aus einem Anfangswerkstoff von $V_2O_5$-Pulver hergestellt ist, der in einen Körper gepreßt ist, um Spaltung zu vermeiden, und wobei der $VO_x$-Werkstoff in einer Dicke im Bereich von 100 bis 500 nm ausgebildet ist.

**16.** System nach Anspruch 7, **dadurch gekennzeichnet, daß** die zweite äußerste Schicht mit einer lunkerfreien Urethanpolymerbeschichtung spinbeschichtet ist.

**17.** System nach Anspruch 7, **dadurch gekennzeichnet, daß** die Quelle für mobile Ionen eine Lithiumionenquelle ist.

**18.** System nach Anspruch 17, **dadurch gekennzeichnet, daß** die Lithiumionenquelle eine Konzentration unterhalb derjenigen Konzentration aufweist, bei der Lithium im wesentlichen mit Feuchtigkeit in der elektrochromischen Schicht reagiert.

19. System nach Anspruch 17, **dadurch gekennzeichnet, daß** die erste und zweite Pufferschicht eine Dicke im Bereich von etwa 10 bis 15 nm aufweisen.

20. System nach Anspruch 1, **dadurch gekennzeichnet, daß** die mehreren äußeren Schichten der ersten und zweiten äußersten Schicht gegenüber liegen; daß die zentrale elektrochromische Schicht näher an der ersten äußersten Schicht angeordnet ist als an der zweiten äußersten Schicht; daß der zentrale Elektrolytschichtverbund näher an der zweiten äußersten Schicht angeordnet ist als an der ersten äußersten Schicht, und der Elektrolytschichtverbund aus einer zentralen Elektrolytunterschicht aus $LiAlF_4$ und gegenüberliegenden Unterschichten aus LiF ausgebildet ist, die die zentrale Elektrolytunterschicht zwischen sich in einem Sandwichaufbau einschließen; daß eine erste ITO-Schicht zwischen der ersten äußersten Schicht und der elektrochromischen Schicht angeordnet ist; und daß die Ionenspeicherschicht zwischen der zweiten äußersten Schicht und der Elektrolytschicht angeordnet ist.

21. System nach Anspruch 20, **dadurch gekennzeichnet, daß** der Elektrolytschichtverbund mit einer zentralen Elektrolytunterschicht in einer Dicke im Bereich von etwa 100 bis 2.000 nm ausgebildet ist, wobei die gegenüberliegenden Schichten jeweils eine Dicke im Bereich von etwa 10 bis 15 nm aufweisen.

22. System nach Anspruch 1, **dadurch gekennzeichnet, daß** die elektrochromische Vorrichtung ein Spiegel und das optische Substrat ein Reflexionssubstrat ist, wobei die mehreren äußeren Schichten gegenüberliegende erste und zweite äußerste Schichten sind; daß eine zentrale elektrochromische Schicht näher an der ersten äußersten Schicht angeordnet ist als an der zweiten äußersten Schicht; daß der zentrale Elektrolytschichtverbund näher an der zweiten äußersten Schicht angeordnet ist als an der ersten äußersten Schicht und der Elektrolytschichtverbund aus einer zentralen Elektrolytunterschicht aus $LiAlF_4$ und gegenüberliegenden Unterschichten aus LiF ausgebildet ist, die die zentrale Elektrolytunterschicht zwischen sich in einem Sandwichaufbau einschließen; daß eine erste ITO-Schicht zwischen der ersten äußersten Schicht und der elektrochromischen Schicht angeordnet ist; und daß die Ionenspeicherschicht zwischen der zweiten äußersten Schicht und der Elektrolytschicht angeordnet ist.

## Revendications

1. Système composite électrochromatique monolithique multicouches (10) capable de transmettre la lumière et utilisable dans un dispositif électrochromatique qui possède un substrat optique et une structure conductrice connectée à une alimentation en puissance, le système pouvant être positionné sur le substrat optique et pouvant être connecté à l'alimentation en puissance via la structure conductrice, de sorte que l'application d'une puissance a pour résultat que le système change depuis une condition transparente sensiblement sans couleur vers une condition transparente sensiblement colorée, comprenant :

   une couche électrochromatique centrale (EC) ; une couche d'électrolyte centrale (EL) avec une surface supérieure et une surface inférieure ; une couche centrale de stockage d'ions (IS) ; un matériau formant couche tampon (18a, 18b) coextensive avec les surfaces supérieure et inférieure de la couche d'électrolyte (EL) et formée à titre de couche tampon double prenant en sandwich la couche d'électrolyte, chaque couche tampon (18a, 18b) étant réalisée en un matériau qui améliore le transfert de charge bidirectionnel entre la couche électrochromatique (EC) et la couche de stockage d'ions (IS); une alimentation effective d'ions mobiles située dans la couche de stockage d'ions (IS) ; et une structure de contact (12) connectée aux couches et susceptible d'être connectée à ladite de structure conductrice (14) pour permettre ladite alimentation de puissance,

   **caractérisé en ce que** chaque couche tampon est formée d'une substance choisie parmi le groupe comprenant LiF et $V_2O_3$ et **en ce que** le système comprend en outre une pluralité de couches extérieures.

2. Système selon la revendication 1, dans lequel la couche d'électrolyte est réalisée en $LiAlF_4$.

3. Système selon la revendication 2, dans lequel chaque couche tampon a une épaisseur dans la plage d'environ 10 à 15 nanomètres.

4. Système selon la revendication 3, dans lequel la couche d'électrolyte a une épaisseur d'environ 800 nanomètres.

**5.** Système selon la revendication 1, dans lequel l'alimentation d'ions mobiles est une concentration d'ions lithium.

**6.** Système selon la revendication 5, dans lequel que la concentration d'ions lithium est au-dessous de la concentration à laquelle le lithium va sensiblement réagir avec l'humidité dans la couche électrochromatique.

**7.** Système selon la revendication 1, dans lequel le système est résistant aux chocs thermiques, la pluralité de couches sont opposées à une première et une deuxième couche entièrement extérieures ; la couche électrochromatique centrale est positionnée plus proche de la première couche entièrement extérieure que de la deuxième couche entièrement extérieure ; la couche d'électrolyte centrale est positionnée plus proche de la deuxième couche entièrement extérieure que de la première couche entièrement extérieure ; une première couche ITO (ITO#1) est positionnée entre la première couche entièrement extérieure et la couche électrochromatique ; la couche de stockage d'ions est positionnée entre la deuxième couche entièrement extérieure et la couche d'électrolyte ; le matériau de la couche tampon comprend une première couche tampon coextensive avec la surface supérieure de la couche d'électrolyte et une deuxième couche tampon coextensive avec la surface inférieure de la couche d'électrolyte, et dans lequel chaque première et chaque deuxième couche est réalisée en un matériau qui améliore le transfert de charge bidirectionnel entre la couche électrochromatique et la couche de stockage d'ions.

**8.** Système selon la revendication 7, dans lequel la première couche entièrement extérieure inclut SiOx, dans lequel x est dans la plage de 1,3 à 1,8, et la première couche entièrement extérieure est prévue avec une épaisseur dans la plage d'environ 5 à 10 nanomètres.

**9.** Système selon la revendication 7, dans lequel la deuxième couche entièrement extérieure est formée de ITO.

**10.** Système selon la revendication 8, dans lequel il est prévu une première couche intérieure formée par-dessus la première couche entièrement extérieure, la première couche intérieure étant formée de $SiO_2$, et prévue sous une épaisseur dans la plage d'environ 2000 à 3000 nanomètres.

**11.** Système selon l'une ou l'autre des revendications 7 et 10, dans lequel est prévue une deuxième couche intérieure formée entre la couche électrochromatique et la première couche entièrement extérieure, et la deuxième couche intérieure est formée de ITO.

**12.** Système selon la revendication 10, dans lequel la deuxième couche intérieure est formée à titre de première et de deuxième sous-couche, la première et la deuxième sous-couche étant formées avec des structures cristallines qui favorisent la conductivité.

**13.** Système selon la revendication 7, dans lequel la couche électrochromatique est formée de WOx, avec 2,9 x 2,99, et la couche électrochromatique est prévue sous une épaisseur dans la plage d'environ 200 à 600 nanomètres.

**14.** Système selon la revendication 7, dans lequel la couche d'électrolyte est formée de $LiAlF_4$, et prévue sous une épaisseur dans la plage d'environ 100 à 2000 nanomètres.

**15.** Système selon la revendication 7, dans lequel la couche de stockage d'ions est formée à titre de matériau poreux VOx qui présente une efficacité de coloration d'environ 2,3 $cm^2$/C dans une couleur présélectionnée, l'efficacité de coloration étant définie comme étant le changement de couleur, de transmission maximum Tmax., et de transmission minimum Tmin, mesuré sur une échelle logarithmique et divisé par la charge totale, Qtot, injectée dans les couches électrochromatiques, ou les couches de stockage d'ions, et donnée par la formule suivante : |log (Tmin/Tmax) |/Qtot ; et dans laquelle 2,45 x 2,5, le matériau VOx étant formé d'un matériau de départ en poudre de $V_2O_5$ qui est pressé en un corps pour empêcher la scission, et dans lequel le matériau VOx est formé avec une épaisseur dans la plage de 100 à 400 nanomètres.

**16.** Système selon la revendication 7, dans lequel la deuxième couche entièrement extérieure est revêtue par centrifugation avec un revêtement de polymère d'uréthane dépourvu de piqûres.

**17.** Système selon la revendication 7, dans lequel l'alimentation en ions mobiles est une alimentation en ions lithium.

**18.** Système selon la revendication 17, dans lequel l'alimentation en ions lithium a une concentration qui est au-dessous de la concentration à laquelle le lithium va sensiblement réagir avec l'humidité dans la couche électrochromatique.

**19.** Système selon la revendication 7, dans lequel chacune parmi la première et la deuxième couche tampon a une épaisseur dans la plage d'environ 10 à 15 nanomètres.

**20.** Système selon la revendication 1, dans lequel la pluralité de couches extérieures sont opposées à une première et une deuxième couche entièrement extérieure, la couche électrochromatique centrale est positionnée plus proche de la première couche entièrement extérieure que de la deuxième couche entièrement extérieure ; la couche d'électrolyte composite centrale est positionnée plus proche de la deuxième couche entièrement extérieure que de la première couche entièrement extérieure, et la couche d'électrolyte composite est formée d'une sous-couche d'électrolyte centrale de $LiAlF_4$, et des couches opposées de LiF prenant en sandwich la sous-couche d'électrode centrale, une première couche ITO est positionnée entre la première couche entièrement extérieure et la couche électrochromatique ; la couche de stockage d'ions est positionnée entre la couche deuxième couche la plus extérieure et la couche d'électrolyte.

**21.** Système selon la revendication 20, dans lequel la couche d'électrolyte composite est formée avec une sous-couche d'électrolyte centrale sous une épaisseur dans la plage d'environ 100 à 2000 nanomètres, et avec des sous-couches opposées ayant chacune une épaisseur dans la plage d'environ 10 à 15 nanomètres.

**22.** Système selon la revendication 21, dans lequel le dispositif électrochromatique est un dispositif à miroir électrochromatique et le substrat optique est un substrat réflecteur, la pluralité de couches extérieures sont opposées à une première et une deuxième couche entièrement extérieure ; une couche électrochromatique centrale est positionnée plus proche de la première couche entièrement extérieure que de la deuxième couche entièrement extérieure ; la couche d'électrolyte composite centrale est positionnée plus proche de la deuxième couche entièrement extérieure que de la première couche entièrement extérieure, et la couche d'électrolyte composite est formée d'une sous-couche d'électrolyte centrale de $LiAlF_4$ et deux sous-couches opposées de LiF prenant en sandwich la sous-couche d'électrolyte centrale ; une première couche ITO est positionnée entre la première couche entièrement extérieure et la couche électrochromatique; la couche de stockage d'ions est positionnée entre la deuxième couche entièrement extérieure et la couche d'électrolyte.

Fig. 1

Substrate  SiO$_x$  SiO$_2$  ITO #1  EC  EL  IS  ITO #2  OC

10

EP 0 829 032 B1

Fig. 2

18b

18

EL

18a

EP 0 829 032 B1

Fig. 3

Photodetector

Substrate
ITO #1
EC

Light Source

Li Vapor

Li

Fig. 4

```
┌─────────────────────────────────┐
│      SUBSTRATE CLEAN, BAKE       │
└─────────────────────────────────┘
                 │
                 ▼
┌─────────────────────────────────┐
│   COAT SiO_x /(SiO_2)/ITO#1*     │
└─────────────────────────────────┘
                 │
                 ▼
┌─────────────────────────────────┐
│     UNLOAD, APPLY ITO#1 &        │
│           BUS BAR                │
└─────────────────────────────────┘
                 │
                 ▼
┌─────────────────────────────────┐
│    COAT WO_3 /Li LOADING/        │
│      LiF/LiAlF_4 / LiF           │
└─────────────────────────────────┘
                 │
                 ▼
┌─────────────────────────────────┐
│   UNLOAD, APPLY CONTACT          │
│         ISOLATION                │
└─────────────────────────────────┘
                 │
                 ▼
┌─────────────────────────────────┐
│      COAT VO_x*/ITO#2*           │
└─────────────────────────────────┘
                 │
                 ▼
┌─────────────────────────────────┐
│     UNLOAD, APPLY ITO#2 &        │
│           BUS BAR                │
└─────────────────────────────────┘
                 │
                 ▼
┌─────────────────────────────────┐
│   SPIN COAT PROTECTIVE           │
│  POLYMER OVER COAT AND           │
│           CURE                   │
└─────────────────────────────────┘
                 │
                 ▼
┌─────────────────────────────────┐
│             TEST                 │
└─────────────────────────────────┘
```